# EUROPÄISCHE PATENTSCHRIFT

(11) **EP 2 817 526 B1**
(45) Veröffentlichungstag und Bekanntmachung des Hinweises auf die Patenterteilung: **04.05.2016**
(21) Anmeldenummer: 13707578.4
(22) Anmeldetag: 19.02.2013
(51) Int. Cl.: F16C 32/04, H02K 7/09

(54) **MAGNETISCHE LAGERUNG MIT KRAFTKOMPENSATION**
MAGNETIC BEARING WITH FORCE COMPENSATION
PALIER MAGNÉTIQUE AVEC COMPENSATION DES FORCES

(30) Priorität: 24.02.2012 DE 102012202842
(43) Veröffentlichungstag der Anmeldung: 31.12.2014
(73) Patentinhaber: Siemens Aktiengesellschaft, 80333 München (DE)
(72) Erfinder: BITTNER, Roland, 91522 Ansbach (DE); HÖSLE, Markus, 91058 Erlangen (DE); KONRAD, Hilmar, 6340 Baar (CH)
(86) Internationale Anmeldenummer: PCT/EP2013/053244
(87) Internationale Veröffentlichungsnummer: WO 2013/124259

(56) Entgegenhaltungen:
- DE-A1- 2 342 767
- DE-A1- 2 406 790
- US-A- 5 939 813
- US-A- 6 043 580
- US-A- 6 100 618

## Beschreibung

Die vorliegende Erfindung betrifft eine Magnetlagervorrichtung mit einer Magneteinrichtung, die ringförmig ausgebildet ist und eine Mittelachse aufweist, zum Halten einer Welle drehbar durch magnetische Kräfte auf der Mittelachse.

Bei herkömmlichen, radialen Magnetlagern, die keine permanent erregte Vormagnetisierung aufweisen, ist die Verwendung einer Drehstromwicklung zur Erzeugung einer stationären Vormägnetisierung bekannt. Hierzu sei beispielsweise auf die Druckschrift DE 23 58 527 A1 verwiesen. Das dort vorgestellte aktive magnetische Lager ist mit einem Drehantrieb, bestehend aus Ständer und Rotor mit einem von Sensoren überwachten Luftspalt, ausgestattet. Einem von Ständerwicklungen durch Speisung mit Drehstrom erzeugten Drehfeld ist ein Steuerfeld überlagert, das von Wicklungen im Ständer durch die Ausgangsströme von Verstärkern erzeugt wird.

Darüber hinaus offenbart die Druckschrift EP 2 148 104 A1 ein magnetisches Radiallager, das in Umfangsrichtung verteilt angeordnete Elektromagnete aufweist. Die Elektromagnete weisen jeweils eine gemeinsame Spule zur Erzeugung einer Vormagnetisierung und eines magnetischen, mehrphasigen Drehfelds auf. Erste und zweite Hälften der Spulen sind jeweils in einem Sternpunkt zusammengeschaltet. Beide Sternpunkte sind zum Anschließen an eine Gleichstromversorgung zur Vormagnetisierungserregung vorgesehen. Die verbleibenden Spulenenden sind zum parallelen Anschließen an einem entsprechenden mehrphasigen Drehstromsteller zur Drehfelderregung vorgesehen.

Magnetlager dienen zum Lagern von drehbaren Wellen. Dabei müssen sie auch die Schwerkraft kompensieren, die statisch auf die Welle wirkt. Darüber hinaus müssen sie auch andere vorbestimmbare Kräfte, wie z.B. durch Unwucht erzeugte Kräfte, kompensieren können. Zur Kompensation dieser vorbestimmbaren Kräfte und gleichzeitig zur Zentrierung der Welle ist die Steuerung bzw. Regelung des Magnetlagers sowie die Spulen des Magnetlagers entsprechend auszulegen.

Aus der Druckschrift DE 23 42 767 A1 ist eine gattungsgemäße Magnetlagervorrichtung bekannt. Hierbei ist beispielsweise in einem topfförmigen Permanentmagneten ein Elektromagnet untergebracht, und die beiden wirken mit einem darüber schwebenden weiteren Permanentmagneten zusammen.

Die Druckschrift WO 95/20260 A1 zeigt eine Induktionsmaschine mit Spezialwicklung zur kombinierten Erzeugung eines Drehmoments und einer Querkraft in derselben. Eine ähnliche elektrische Maschine mit einem magnetisch gelagerten Läufer ist aus der Druckschrift DE 91 12 183 U1 bekannt.

Ferner zeigt die Druckschrift US 3 791 704 A eine magnetische Lagerung, bei der Permanentmagnete in ihrer Position mittels einer Schraube verstellbar gesteuert sind.

US-A-6 043 580 offenbart eine Magnetlagervorrichtung mit einer ersten Magneteinrichtung, die ringförmig ausgebildet ist und eine Mittelachse aufweist, zum Halten einer Welle drehbar durch magnetische Kräfte auf der Mittelachse, einer zweiten Magneteinrichtung, wobei die zweite Magneteinrichtung ringförmig ausgebildet und zur ersten Magneteinrichtung konzentrisch angeordnet ist, wobei die erste Magneteinrichtung ein erstes Spulensystem und die zweite Magneteinrichtung ein zweites Spulensystem aufweist, jedes Spulensystem jeweils mehrere Polpaare aufweist, und die Polpaarzahl des zweiten Spulensystems genau um den Wert eins geringer ist als die Polpaarzahl des ersten Spulensystems.

Die Aufgabe der vorliegenden Erfindung besteht somit darin, eine Magnetlagervorrichtung vorzuschlagen, die kostengünstiger hergestellt werden kann. Darüber hinaus soll ein verbessertes Verfahren zum magnetischen Lagern einer drehbaren Welle vorgeschlagen werden, mit dem auf die Welle wirkende, vorbestimmte Kräfte kompensiert werden können.

Erfindungsgemäß wird diese Aufgabe gelöst durch eine Magnetlagervorrichtung nach Anspruch 1.

In vorteilhafter Weise erfolgt die Lagerung der Welle also mit zwei unterschiedlichen, voneinander unabhängigen Magneteinrichtungen. Die erste Magneteinrichtung sorgt dafür, dass die Welle auf der Mittelachse des Lagers gehalten wird, und die zweite Magneteinrichtung ist ausschließlich dafür verantwortlich, die auf die Welle wirkende, vorbestimmte Kraft zu kompensieren. Durch diese Trennung der Zuständigkeiten kann die erste Magneteinrichtung deutlich kleiner ausgelegt werden, denn sie muss nicht zusätzlich beispielsweise ständig die Schwerkraft mitkompensieren. Damit kann insbesondere auch die Dimensionierung der Elektronik für die Magnetlagervorrichtung reduziert werden.

In einer Ausführungsform kann die zweite Magneteinrichtung einen Permanentmagneten aufweisen. Dies ist insbesondere dann vorteilhaft, wenn die Schwerkraft der Welle kompensiert werden soll, denn es wird dann für diese Kompensation kein elektrischer Strom benötigt, da ja die notwendige magnetische Kraft durch einen oder mehrere Permanentmagnete aufgebracht wird.

Insbesondere kann ein radialer Abstand des Permanentmagneten zu der Mittelachse der ersten Magneteinrichtung zur Kompensation der vorbestimmbaren Kraft durch eine in die Magnetlagervorrichtung integrierte Regelungseinrichtung regelbar sein. Dies wäre beispielsweise dann vorteilhaft, wenn sich die vorbestimmbare Kraft ändern kann. Ändert sich beispielsweise an der Welle bzw. an dem Lager eine Masse, so verändert sich die zu kompensierende Schwerkraft, so dass eine entsprechende Regelung vorteilhaft ist. Treten an der Welle bzw. dem Lager Unwuchten auf, so ist es ebenfalls günstig, diese Unwuchten durch Regelung in geeigneter Weise auszugleichen.

Die zweite Magneteinrichtung ist ringförmig ausgebildet und zur ersten Magneteinrichtung konzentrisch angeordnet. Dadurch können vorbestimmbare Kräfte in alle radialen Richtungen kompensiert werden.

Speziell weist die erste Magneteinrichtung ein erstes Spulensystem und die zweite Magneteinrichtung ein zweites Spulensystem sowie jedes Spulensystem jeweils mehrere Polpaare auf, und die Polpaarzahl des zweiten Spulensystems ist genau um den Wert eins kleiner oder größer als die Polpaarzahl des ersten Spulensystems. Dadurch verstärken sich zwei gleichgerichtete Pole (z.B. zwei Nordpole; einer von der ersten Magneteinrichtung und einer von der zweiten Magneteinrichtung) auf der einen Seite der Magnetlagervorrichtung und auf der gegenüberliegenden Seite schwächen sich zwei gegengerichtete Pole (ein Nordpol und ein Südpol; einer von der ersten Magneteinrichtung und einer von der zweiten Magneteinrichtung).

Dadurch kann gezielt eine Kraft in Richtung der sich verstärkenden Pole erzeugt werden.

Darüber hinaus kann die Magnetlagervorrichtung einen ersten Umrichter zum Ansteuern der ersten Magneteinrichtung und einen zweiten Umrichter zum Ansteuern der zweiten Magneteinrichtung aufweisen. Damit lässt sich die Lagervorrichtung beispielsweise von einem Gleichspannungssystem versorgen, wie es typischerweise in Elektrofahrzeugen bzw. Hybrid-Fahrzeugen bereitgestellt wird.

Wenn die vorbestimmbare Kraft die Schwerkraft ist, ist es vorteilhaft, wenn die zweite Magneteinrichtung eine zweite Regelungseinrichtung aufweist, mit der die zweite Magneteinrichtung zur Kompensation der auf die Welle wirkenden Schwerkraft regelbar ist. Damit ist es nicht mehr notwendig, dass die erste Magneteinrichtung die Schwerkraft kompensiert, so dass sie entsprechend geringer dimensioniert werden kann.

Wenn die vorbestimmte Kraft durch eine Unwucht der oder an der Welle bzw. an dem Lager hervorgerufen wird, kann die zweite Magneteinrichtung eine zweite Regelungseinrichtung aufweisen, mit der die zweite Magneteinrichtung zur Kompensation der vorbestimmten Kraft regelbar ist. Damit ist es möglich, auch dynamische Kräfte, die in unterschiedliche radiale Richtungen wirken können, zu kompensieren.

Die vorliegende Erfindung wird nun anhand der beigefügten Zeichnungen näher erläutert, in denen zeigen:
- FIG 1: einen Querschnitt durch ein Magnetlager mit Permanentmagneten zur Kompensation der Schwerkraft;
- FIG 2: eine Umrichterschaltung zum Betreiben einer Magnetlagervorrichtung mit zwei Spulensystemen und
- FIG 3: eine Magnetfeldanordnung eines erfindungsgemäßen Magnetlagers.

Die nachfolgend näher geschilderten Ausführungsbeispiele stellen bevorzugte Ausführungsformen der vorliegenden Erfindung dar.

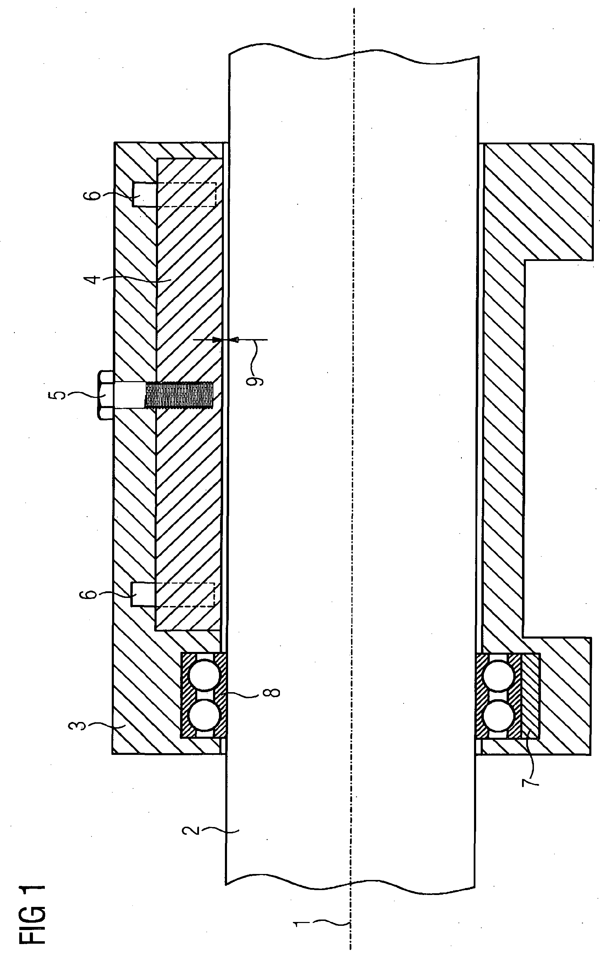

In dem Beispiel von FIG 1 ist ein Längsschnitt durch ein magnetisches Lager dargestellt. Es besitzt eine Mittelachse 1, um die eine Welle 2 drehbar gelagert werden soll. Außerdem besitzt das Magnetlager ein Gehäuse 3, in dem Magneteinrichtungen zur Lagerung untergebracht sind. Typischerweise weist ein derartiges Magnetlager eine erste Magneteinrichtung auf, die zur Zentrierung der Welle 2 dient. Diese erste Magneteinrichtung ist in FIG 1 der Übersicht halber nicht eingezeichnet. Sie umfasst ein Spulensystem mit mehreren Spulen, die am Umfang verteilt angeordnet sind.

Auf die Welle wirkt die Schwerkraft, die in der Abbildung von FIG 1 nach unten gerichtet ist. Daher wird in der Magnetlagervorrichtung, hier innerhalb des Gehäuses 3, eine zusätzliche zweite Magneteinrichtung vorgesehen, die der Schwerkraft entgegen wirkt. In Beispiel von FIG 1 weist die zweite Magneteinrichtung einen Permanentmagneten 4 auf. Der Permanentmagnet 4 kann aus mehreren einzelnen Magneten bestehen. Er besitzt, betrachtet in axialer Richtung, vorzugsweise bogenförmige Gestalt, wobei sein Abstand zu der Welle 2 günstigerweise überall gleich ist.

Über eine mittige Schraube 5 kann die auf die Welle 2 wirkende Magnetkraft durch Abstandsänderung zur Welle eingestellt werden. Falls an Stelle des Permanentmagneten ein Elektromagnet Verwendung findet, kann die Feldstärke und damit die Anziehungskraft zusätzlich oder alternativ durch eine Änderung des elektrischen Stroms erreicht werden.

Links und rechts von der Schraube 5 können Führungsbolzen 6 vorgesehen sein, um den Permanentmagneten 4 zu führen, wenn dessen Abstand von der Welle 2 geändert wird. Die Einstellung des Abstands zwischen Permanentmagnet 4 und Welle 2 kann beispielsweise unter Zuhilfenahme einer Kraftmessdose 7 erfolgen. Besitzt nämlich wie in dem Beispiel von FIG 1 die Magnetlagervorrichtung ein Fanglager 8, so kann dieses Fanglager 8 über die Kraftmessdose 7 an dem Gehäuse 3 abgestützt werden. Bei dem Fanglager 8 kann es sich beispielsweise um ein loses Kugellager handeln, das bei einem Ausfall des Magnetlagers die Welle 2 mechanisch fängt. Wird nun der Abstand zwischen dem Permanentmagneten 4 und der Welle 2 so eingestellt, das die Schwerkraft der Welle 2 vollständig kompensiert wird, so misst die Kraftmessdose 7 nur noch das Gewicht des Fanglagers 8. Damit lässt sich die Schwerkraftkompensation durch die zweite Magneteinrichtung (hier den Permanentmagneten 4) optimal einstellen.

Der Abstand zwischen Permanentmagnet 4 und Welle 2 kann so weit reduziert werden, dass eine drehfeste Fixierung der Welle 2 erreicht wird. Der Magnet 4 kann hierdurch als eine Art Feststellbremse verwendet werden. Bei Windkraftgeneratoren können so beispielsweise leichter Reparaturarbeiten durchgeführt werden.

In einer Ausgestaltung des Magnetlagers weist der Magnet, wie bereits angesprochen wurde, eine Wölbung auf, welche einem äußeren Radius der Welle 2 in etwa entspricht. So kann der Luftspalt 9 zwischen Welle und Magnet reduziert und die Wirkkraft des Magneten erhöht werden.

In einer weiteren Ausgestaltung des Magnetlagers ist die Änderung des Abstands 9 zwischen dem Magneten 4 und der Welle 2 automatisiert. Die Änderung des Abstands kann gesteuert oder geregelt erfolgen. Eine Regelgröße ist beispielsweise die durch die Kraftmessdose 7 gemessene Kraft. Anhand dieser Kraft kann geregelt werden, wobei vorteilhaft ein Maximalwert und ein Minimalwert der Kraft festgelegt sind. In einem Regelkreis zur Regelung der Kraft, in welchem der Abstand des Magneten von der Welle eine Stellgröße ist, kann ein minimaler Wert der Stellgröße festgelegt werden, der nicht unterschritten werden darf.

Falls die Welle 2 ein nicht magnetisches Material aufweisen sollte, kann die Welle mit einem magnetischen Ringaufsatz (Manschette) ausgestattet werden. Diese kann auch geblecht ausgeführt sein, um Wirbelsturmverluste zu minimieren. Zur Minimierung der Wirbelsturmverluste kann auch eine weichmagnetische Welle mit einer entsprechenden Manschette versehen werden.

Das in FIG 1 dargestellte Lager kann auch, was hier nicht beansprucht wird, ein mechanisches Lager mit magnetischer Kompensationseinheit sein. In diesem Fall wäre das in FIG 1 dargestellte Lager 8 ein übliches Wälzlager (z.B. Kugel- oder Rollenlager) und es bräuchte keine erste Magneteinrichtung zur Zentrierung der Welle vorgesehen sein. Selbst bei einem einfachen stationären Magnetfeld der zweiten Magneteinrichtung (Permanentmagnet 2), welches eine auf das Lager wirkende Gewichtslast reduziert, kann so eine größere Betriebsdauer des Lagers durch dessen Entlastung erreicht werden. Dies kann insbesondere dann von Vorteil sein, wenn der Austausch von Lagern sehr schwierig und kostenintensiv ist (z.B. offshore Windparks).

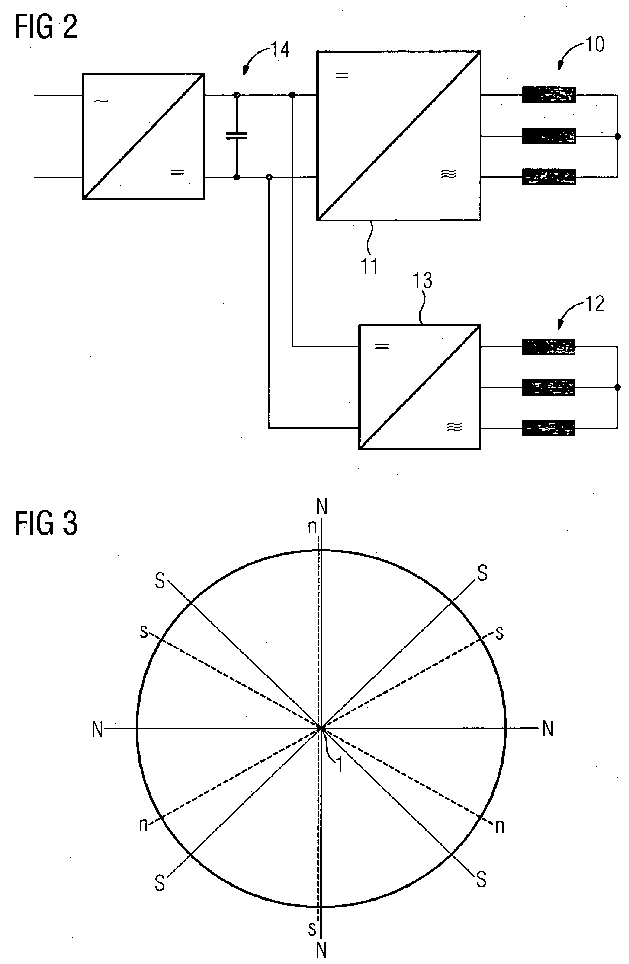

Anhand der FIG 2 und 3 wird nun ein Ausführungsbeispiel der erfindungsgemäßen Magnetlagervorrichtung erläutert, bei der die zweite Magneteinrichtung zur Kompensation einer vorbestimmbaren Kraft auf die Welle (z.B. Schwerkraft oder durch Unwuchten hervorgerufene Kräfte) Elektromagnete aufweist. Die Schaltung von FIG 2 zeigt einen möglichen schaltungstechnischen Aufbau einer derartigen Magnetlagervorrichtung. Die Vorrichtung besitzt zur Zentrierung der Welle (in FIG 2 nicht dargestellt) beispielsweise ein dreiphasiges Spulensystem 10. Ein Umrichter 11 speist dieses erste Spulensystem 10. Außerdem besitzt der Umrichter 11 hier eine Steuerung bzw. Regelung, um die Ströme durch das erste Spulensystem 10 so zu regulieren, das die vorbestimmbare Kraft auf die Welle durch das Magnetfeld des Spulensystems 10 kompensiert wird. Eine etwaige Regelschleife, bei der beispielsweise eine Kraft auf die Welle 2 oder ein Versatz der Welle zur Mittelachse 1 gemessen wird, ist in FIG 2 nicht eingezeichnet.

Die Magnetlagervorrichtung weist außerdem eine zweite Magneteinrichtung auf, die ein zweites Spulensystem 12 umfasst. Die beiden Spulensysteme 10 und 12 sind voneinander unabhängig, und das zweite Spulensystem 12 wird hier auch durch einen separaten Umrichter 13 angesteuert. Dieser Umrichter 13 erzeugt auch hier einen Dreiphasenstrom für das dreiphasige Spulensystem 12.

Die Versorgung der beiden Umrichter 11 und 13 erfolgt im vorliegenden Beispiel über einen Zwischenkreis 14. Der Zwischenkreis 14 wiederum wird von einem Gleichrichter gespeist, der beispielsweise einen einphasigen Wechselstrom gleichrichtet.

Auch der zweite Umrichter 13 kann eine Regelung aufweisen, mit der es möglich ist, die durch das zweite Spulensystem hervorgerufenen magnetischen Kompensationskräfte in Abhängigkeit von unterschiedlichen Messgrößen zu regeln. So kann zum Erfassen eine Unwucht eine Beschleunigung oder beispielsweise ein Ausschlag der Welle gemessen und einem in den Umrichter 13 integrierten Regler zugeführt werden.

Der Regler in dem zweiten Umrichter 13 kann eine geringere Regelgenauigkeit besitzen als der Regler in dem ersten Umrichter 11, denn Letzterer muss für die exakte mittige Positionierung des Rotors sorgen.

Mit der Schaltung von FIG 2 lässt sich nun ein Magnetfeld realisieren, das in FIG 3 symbolisch angedeutet ist. Hierzu ist zu bemerken, dass die erste Magneteinrichtung mit dem ersten Spulensystem 10 und die zweite Magneteinrichtung mit dem zweiten Spulensystem 12 jeweils ringförmig sind und konzentrisch angeordnet sind. Dadurch überlagern sich die Magnetfelder beider Magneteinrichtungen in der in FIG 3 dargestellten Weise.

Das Beispiel von FIG 3 bezieht sich auf eine erste Magneteinrichtung mit einer achtpoligen Wicklung. D.h. das Spulensystem 10 besitzt am Umfang verteilt acht Pole und somit eine Polpaarzahl p = 4. Die zweite Magneteinrichtung hingegen besitzt eine sechspolige Wicklung. D.h. das zweite Spulensystem 12 besitzt sechs Pole am Umfang verteilt und somit eine Polpaarzahl p = 3. In FIG 3 sind die acht Pole des ersten Spulensystems, welches für die Zentrierung der Welle verantwortlich ist, mit den großen Buchstaben N und S dargestellt. Die sechs am Umfang verteilten Pole des zweiten Spulensystems 12 sind mit den Buchstaben n und s dargestellt. Auf der zwölf Uhr-Position liegen die Pole beider Spulensysteme übereinander, wie auch in der sechs Uhr-Position. Werden nun die beiden Spulensysteme 10 und 12 so bestromt, das sich die in FIG 3 dargestellten magnetischen Pole ergeben, so verstärken sich die Magnetfelder in der oberen Hälfte der ringförmigen Magnetanordnung, da sich jeweils Nordpole N, n und Südpole S, s sehr nahe stehen. Dem gegenüber stehen sich in der unteren Hälfte der Magnetanordnung jeweils Südpol S, s und Nordpol N, n sehr nahe. Dadurch ergibt sich eine Schwächung des jeweiligen Magnetfelds. Zu dem Zeitpunkt mit der Magnetkonstellation gemäß FIG 3 würde also die im Inneren der Magnetlagervorrichtung laufende Welle nach oben gezogen werden. Dies könnte zur Kompensation der Schwerkraft dienen. Eine derartige Magnetkonstellation kann aber auch dynamisch in unterschiedlichste Richtungen gedreht werden, so dass sich damit beispielsweise eine Unwucht ausgleichen lässt.

Wird also während des Betriebs eines Rotationskörpers (Welle mit gegebenenfalls angebauten Teilen) eine Unwucht festgestellt, so kann diese Unwucht mittels der beschriebenen Magnetlagervorrichtung kompensiert werden. Prinzipiell kann anstelle der zweiten Spulenanordnung 12, wie oben angedeutet wurde, auch ein Permanentmagnet 4, dessen Luftspalt zum Rotationskörper geregelt verändert werden kann, eingesetzt werden.

In einer weiteren Ausgestaltung der Erfindung kann der Magnet dazu eingesetzt werden, z.B. zu Testzwecken eine Schwingung im Rotationskörper anzuregen oder zu dämpfen.

## Patentansprüche

1. Magnetlagervorrichtung mit
- einer ersten Magneteinrichtung, die ringförmig ausgebildet ist und eine Mittelachse (1) aufweist, zum Halten einer Welle (2) drehbar durch magnetische Kräfte auf der Mittelachse,
- einer zweiten Magneteinrichtung, die von der ersten Magneteinrichtung unabhängig ist, zum Kompensieren einer vorbestimmbaren Kraft, die auf die Welle (2) wirkt, wobei die zweite Magneteinrichtung ringförmig ausgebildet und zur ersten Magneteinrichtung konzentrisch angeordnet ist,
- wobei die erste Magneteinrichtung ein erstes Spulensystem (10) und die zweite Magneteinrichtung ein zweites Spulensystem (12) aufweist, jedes Spulensystem jeweils mehrere Polpaare aufweist, und die Polpaarzahl des zweiten Spulensystems (12) genau um den Wert eins geringer ist als die Polpaarzahl des ersten Spulensystems (10),
- wobei die erste Magneteinrichtung zur Zentrierung der Welle (2) dient und wobei die zweite Magneteinrichtung der Schwerkraft entgegenwirkt.

2. Magnetlagervorrichtung nach Anspruch 1, wobei die zweite Magneteinrichtung einen Permanentmagneten (4) aufweist.

3. Magnetlagervorrichtung nach Anspruch 2, wobei ein radialer Abstand des Permanentmagneten (4) zu der Mittelachse der ersten Magneteinrichtung zur Kompensation der vorbestimmbaren Kraft durch eine in die Magnetlagervorrichtung integrierte erste Regelungseinrichtung regelbar ist.

4. Magnetlagervorrichtung nach einem der vorhergehenden Ansprüche, die einen ersten Umrichter (11) zum Ansteuern der ersten Magneteinrichtung und ein zweiten Umrichter (13) zum Ansteuern der zweiten Magneteinrichtung aufweist.

5. Magnetlagervorrichtung nach einem der vorhergehenden Ansprüche, wobei die vorbestimmbare Kraft die Schwerkraft ist, und die zweite Magneteinrichtung eine zweite Regelungseinrichtung aufweist, mit der die zweite Magneteinrichtung zur Kompensation der auf die Welle (2) wirkenden Schwerkraft regelbar ist.

6. Magnetlagervorrichtung nach einem der vorhergehenden Ansprüche, wobei die vorbestimmbare Kraft durch eine Unwucht der oder an der Welle hervorgerufen ist, und die zweite Magneteinrichtung eine zweite Regelungseinrichtung aufweist, mit der die zweite Magneteinrichtung zur Kompensation der vorbestimmbaren Kraft regelbar ist.

## Claims

1. Magnetic bearing device with
- a first magnet device which is designed to be annular and which has a central axis (1), for retaining a shaft (2) on the central axis in a rotatable manner by means of magnetic forces,
- a second magnet device that is independent of the first magnet device, for compensating for a specifiable force acting on the shaft (2), wherein the second magnet device is designed to be annular and is arranged concentrically relative to the first magnet device,
- wherein the first magnet device has a first coil system (10) and the second magnet device has a second coil system (12) and each coil system has a plurality of pole pairs, and the number of pole pairs of the second coil system (12) is less than the number of pole pairs of the first coil system (10) by a value of precisely one,
- wherein the first magnet device centres the shaft (2) and wherein the second magnet device counteracts the gravitational force.

2. Magnetic bearing device according to claim 1, wherein the second magnet device has a permanent magnet (4).

3. Magnetic bearing device according to claim 2, wherein a radial spacing of the permanent magnet (4) from the central axis of the first magnet device to compensate for the specifiable force can be regulated by a first control device that is integrated in the magnetic bearing device.

4. Magnetic bearing device according to one of the preceding claims, having a first converter (11) for actuating the first magnet device and a second converter (13) for actuating the second magnet device.

5. Magnetic bearing device according to one of the preceding claims, wherein the specifiable force is gravitational force, and wherein the second magnet device has a second control device with which the second magnet device can be regulated to compensate for the gravitational force acting on the shaft (2).

6. Magnetic bearing device according to one of the preceding claims, wherein the specifiable force is caused by an imbalance of or on the shaft, and wherein the second magnet device has a second control device with which the second magnet device can be regulated to compensate for the specifiable force.

## Revendications

1. Dispositif formant palier magnétique et comprenant
- un premier dispositif magnétique qui est annulaire et qui a un axe ( 1 ) médian, pour maintenir un arbre ( 2 ) tournant par des forces magnétiques sur l'axe médian,
- un deuxième dispositif magnétique, qui est indépendant du premier dispositif magnétique, pour compenser une force pouvant être définie à l'avance qui s'applique à l'arbre ( 2 ), le deuxième dispositif magnétique étant annulaire et étant disposé concentriquement au premier dispositif magnétique,
- le premier dispositif magnétique ayant un premier système ( 10 ) de bobine et le deuxième dispositif magnétique ayant un deuxième système ( 12 ) de bobine, chaque système de bobine ayant respectivement plusieurs paires de pôles et le nombre de paires de pôles du deuxième système ( 12 ) de bobine étant plus petit exactement de la valeur un que le nombre de paires de pôles du premier système ( 10 ) de bobine,
- le premier dispositif magnétique servant à centrer l'arbre ( 2 ) et le deuxième dispositif magnétique s'opposant à la force de gravité.

2. Dispositif formant palier magnétique suivant la revendication 1, dans lequel le deuxième dispositif magnétique a un aimant ( 4 ) permanent.

3. Dispositif formant palier magnétique suivant la revendication 1, dans lequel une distance radiale de l'aimant ( 4 ) permanent à l'axe médian du premier dispositif magnétique peut, pour la compensation de la force pouvant être définie à l'avance, être réglée par un premier dispositif de réglage intégré dans le dispositif formant palier magnétique.

4. Dispositif formant palier magnétique suivant l'une des revendications précédentes, qui comporte un premier convertisseur ( 11 ) pour exciter le premier dispositif magnétique et un deuxième convertisseur ( 13 ) pour exciter le deuxième dispositif magnétique.

5. Dispositif formant palier magnétique suivant l'une des revendications précédentes, dans lequel la force pouvant être définie à l'avance est la force de gravité et le deuxième dispositif magnétique a un deuxième dispositif de réglage, par lequel le deuxième dispositif magnétique peut être réglé pour compenser la force de gravité s'appliquant à l'arbre ( 2 ).

6. Dispositif formant palier magnétique suivant l'une des revendications précédentes, dans lequel la force pouvant être définie à l'avance est provoquée par un balourd de l'arbre ou sur l'arbre et le deuxième dispositif magnétique a un deuxième dispositif de réglage, par lequel le deuxième dispositif magnétique peut être réglé pour compenser la force pouvant être définie à l'avance.
